# EUROPÄISCHE PATENTANMELDUNG

(11) **EP 4 213 324 A1**
(43) Veröffentlichungstag der Anmeldung: **19.07.2023**
(21) Anmeldenummer: 23150786.4
(22) Anmeldetag: 09.01.2023
(51) Int. Cl.: H02G 3/18

(54) **BODENTANKDOSE**

(30) Priorität: 18.01.2022 DE 202022100257 U
(71) Anmelder: OBO Bettermann Hungary Kft., 2347 Bugyi (HU)
(72) Erfinder: Sándor György Borza, 2371 Dabas-Sári (HU); Ference Sebök, 1237 Budapest (HU)
(74) Vertreter: Haverkamp Patentanwälte PartG mbB

(57) **Zusammenfassung**

Die Erfindung betrifft eine Bodentankdose 1 mit einem einen Bodentank oberseitig verschließenden Deckel 3 und einer Schnurauslassaussparung A zum Hindurchführen von einer oder mehreren Leitungen zwischen dem Bodentank B und der benachbarten Bodenoberfläche 2. Die Bodentankdose 1 verfügt über ein an einem Lagerabschnitt bewegbar gelagertes, die Schnurauslassaussparung A in einer Schließstellung verschließendes und in einer Offenstellung die Schnurauslassaussparung A freigebendes, zwischen der Schließstellung und der Offenstellung verstellbares Schließelement 10. Die Schnurauslassaussparung A weist an dem Bodentank in horizontale Richtung und das Schließelement 10 bildet in seiner Offenstellung einen zur Umgebung führenden Schnurauslassboden 11.

## Beschreibung

Die Erfindung betrifft eine Bodentankdose mit einem einen Bodentank oberseitig verschließenden Deckel und einer Schnurauslassaussparung zum Hindurchführen von einer oder mehreren Leitungen, wobei die Bodentankdose über ein an einem Lagerabschnitt bewegbar gelagertes, die Schnurauslassaussparung in einer Schließstellung verschließendes und in einer Offenstellung die Schnurauslassaussparung freigebendes, zwischen der Schließstellung und der Offenstellung verstellbares Schließelement verfügt.

Bodentankdosen werden als Unterflurinstallation eingesetzt. Bei einer solchen Unterflurinstallation kann es sich um einen Einbau der Bodentankdose in einen Hohlboden oder in einen Estrich handeln. Auch im Außenbereich sind solche Unterflurinstallationen üblich. In dem von der Bodentankdose einhüllenden Raum - dem Bodentank - sind Installationsanschlüsse wie elektrische/elektronische Steckdosen, Wasseranschlüsse etc. angeordnet. Im Betrieb werden Leitungen von diesen Installationsanschlüssen, etwa elektrische Leitungen oder Wasserleitungen, aus dem Bodentank an die Umgebung herausgeführt und an entsprechende Verbraucher angeschlossen. Zum Herausführen der Leitungen weist die Bodentankdose einen sogenannten Schnurauslass auf, wobei durch eine Schnurauslassaussparung die Leitungen aus dem Bodentank in die Umgebung herausgeführt werden.

Zum Zugänglichmachen des Bodentankes und damit zum Bestücken und Anschließen von Leitungen an die Installationsanschlüsse in dem Bodentank verfügt eine Bodentankdose über einen den Bodentank oberseitig verschließenden Deckel. Ein solcher Deckel ist typischerweise als Klappdeckel ausgestaltet. Auch ist denkbar, dass Installationsanschlüsse an dem Deckel befestigt sind, um ein einfaches Anschließen der Leitungen zu ermöglichen.

Die Schnurauslassaussparung der Bodentankdose ist typischerweise für eine Nicht-Benutzungsstellung verschließbar. So ist aus CH 698 198 B1 ein Installationsdeckel bekannt, bei dem ein Schnurauslass mittels eines an einem Lagerabschnitt gelagerten, separaten Deckels als Schließelement für den Schnurauslass geöffnet und verschlossen werden kann. Zum Öffnen den Schnurauslasses wird das Schließelement aufgeschwenkt, translatorisch gegenüber dem Deckelrahmen verschoben und mit einem ausgestellten, zu dem Deckelrahmen weisenden Rand auf den Deckelrahmen aufgestellt. In den ausgestellten Rand des Schließelementes ist eine Aussparung eingebracht, sodass eine Schnurauslassaussparung zwischen Deckelrahmen und Schließelement gebildet wird.

Auch sind Schließelemente bekannt, die für die Änderung der Stellung gewendet werden; als Beispiel sei FR 731 863 B genannt. Das hier offenbarte Schließelement ist an einem Lagerabschnitt, respektive in einer seitlichen Führung an der Bodentankdose gehalten und verfügt über zwei winklig zueinander angeordnete Führungsvorsprünge, die zwei Stellungen entsprechen: Einer Schließstellung, bei der der Schnurauslass geschlossen ist und einer Offenstellung, bei der der Schnurauslass geöffnet ist. Zum Ändern der Stellung wird das mit ersten Führungsvorsprüngen in der seitlichen Führung gehaltene Schließelement aus der seitlichen Führung herausgenommen, gewendet und wieder in die seitliche Führung, jedoch mit zweiten Führungsvorsprüngen eingesetzt. Durch die winklige Anordnung der Führungsvorsprünge ist das Schließelement gegenüber der Schließstellung in der Offenstellung gegenüber dem Deckel angestellt und ragt von diesem nach oben ab. Es wird durch das Schließelement eine Schutzkappe über dem Schnurauslass gebildet, die den Schnurauslass oberseitig begrenzt und hierdurch herausgeführte Kabel vor einer Beschädigung durch eine von oben einwirkende Kraft, beispielsweise durch ein Überfahren, schützt.

Solche nach oben weisende, von dem Boden abragende Schließelemente stellen problematischer Weise eine Stolpergefahr dar. Insbesondere bei Konstruktionen, die dezent designt sind, besteht die Gefahr des Nicht-Bemerkens durch Vorbeilaufende. Andererseits: Würden die Leitungen in den vorgenannten Ausgestaltungen nicht nach oben geschützt werden, besteht aufgrund der starken Biegung der Leitungen bei im Wesentlichen senkrecht nach oben herausgeführten Leitungen die Gefahr des Abknickens derselben.

Ausgehend von diesem diskutierten Stand der Technik und der damit verbundenen Problematik stellt sich die Erfindung die Aufgabe, eine sichere Bodentankdose bereitzustellen, bei der das Verletzungsrisiko minimiert ist und gleichzeitig aus einem Schnurauslass herausgeführte Leitungen vor einer Beschädigung im Bereich der Schnurauslassaussparung geschützt sind.

Gelöst wird diese Aufgabe durch eine eingangs genannte, gattungsgemäße Bodentankdose, bei der die Schnurauslassaussparung an dem Bodentank in horizontale Richtung weist und das Schließelement in ihrer Offenstellung einen zur Umgebung führenden Schnurauslassboden bildet.

Bevorzugte Ausgestaltungen ergeben sich aus den abhängigen Ansprüchen und der Beschreibung.

Vorgesehen ist, an der Bodentankdose die Schnurauslassaussparung in seitliche Richtung weisend anzuordnen. Auf diese Weise werden Leitungen nicht nach oben aus dem Bodentank herausgeführt, sondern seitlich. Der Bodentank geht in den Schnurauslass durch die in horizontale Richtung weisende Schnurauslassaussparung über. Der Normalen-Vektor der Schnurauslassaussparung weist einen horizontalen Anteil auf, der ein solches Führen der Leitungen in horizontale Richtung ermöglicht. Dieser horizontale Anteil ist typischerweise größer als der vertikale Anteil. Auf diese Weise wird eine Schnurauslassaussparung bereitgestellt, deren oberer Abschluss unterhalb des die Bodentankdose umgebenden Bodens, typischerweise unterhalb des oberen Abschlusses des Deckels der Bodentankdose angeordnet ist. Typischerweise ist die Schnurauslassaussparung in horizontaler Richtung ausgerichtet, sodass die Leitungen durch die Schnurauslassaussparung im Wesentlichen in horizontaler Richtung geführt werden. So ist typischerweise vorgesehen, die Schnurauslassaussparung in eine Seitenwand der Bodentankdose einzubringen.

Ferner ist vorgesehen, dass das die Schnurauslassaussparung verschließende Schließelement in seiner Offenstellung derart ausgebildet ist, dass es einen Schnurauslassboden bildet, auf dem die aus dem Bodentank durch die Schnurauslassaussparung herausgeführten Leitungen aufliegen. Das Schließelement stützt die Leitungen somit entgegen der Gewichtskraft ab. In der Schließstellung verschließt das Schließelement diese Schnurauslassaussparung. Das Schließelement verläuft von dem unteren Abschluss der Schnurauslassaussparung nach oben, typischerweise nach Art einer schrägen Ebene, in seiner Offenstellung, sodass die Leitungen vom unteren Abschluss der Schnurauslassaussparung, welche unter der Bodenebene liegt, auf Bodenebene heraufgeführt sind. Auf diese Weise wird ein Auslasskanal durch das Schließelement bereitgestellt, der typischerweise nach oben offen ist.

Durch die vorgeschlagene Anordnung von Schnurauslassaussparung und Schließelement wird eine Bodentankdose bereitgestellt, die auf den Einsatz von nach oben ragenden Elementen verzichten kann, ohne dass die aus der Schnurauslassaussparung herausgeführten Leitungen Gefahr laufen, bei einem Überlaufen oder Überfahren beschädigt zu werden. Durch das Herausführen in seitliche Richtung schützt das die Schnurauslassaussparung umgebende Material der Bodentankdose und des Bodens die Leitungen in diesem Bereich. Ohnehin auf der Bodenebene geführte Leitungen werden aufgrund ihrer Größe bzw. Länge von Vorbeigehenden ohnehin problemlos erkannt, sodass die Stolpergefahr reduziert ist.

Zum Verändern der Stellung des Schließelementes von seiner Schließstellung in seine Offenstellung und andersherum ist bevorzugt vorgesehen, dass das Schließelement an einem Lagerabschnitt der Bodentankdose wendbar gelagert ist. Zudem weist das Schließelement zwei verschieden ausgebildete und/oder winklig zueinander ausgerichtete Funktionsflächen auf, die typischerweise Seitenflächen eines als Körper, bevorzugt als Hohlkörper ausgebildeten Schließelementes darstellen: Eine Funktionsfläche dient dem Verschließen der Schnurauslassaussparung gegenüber der Umgebung (Schließstellung), eine andere Seite dient als Schnurauslassboden (Offenstellung).

Insbesondere kann das Schließelement im Wesentlichen eine dreieckige Querschnittsfläche bzw. Grundfläche aufweisen, insbesondere ein im Wesentlichen rechtwinkliges Dreieck. Eine Seite des Dreiecks stellt den Schnurauslassboden bereit, typischerweise die längste Seite des Dreieckes, welches typischerweise die Hypotenuse ist. Eine andere Fläche ist dazu ausgebildet, in der Schließstellung die Schnurauslassaussparung zu verschließen. Verschließen heißt in diesem Kontext, dass ein Zugang von außen durch die Schnurauslassaussparung unterbunden ist. So kann die Schnurauslassaussparung unmittelbar und/oder mittelbar verschlossen sein, wobei ein unmittelbares Verschließen ein Verschließen meint, bei dem das die Schnurauslassaussparung umgebende Material kontaktiert. Das Schließelement kann nach Form eines Prismas ausgebildet sein, sodass die Seitenflächen des Prismas die vorstehend beschriebenen Funktionsflächen des Schließelementes bilden.

Bevorzugt ist vorgesehen, dass das Schließelement um eine Achse wendbar ist, die im Wesentlichen parallel zu der Schnurauslassaussparung ist. Das Schließelement ist somit im der Bodentankdose zugehörigen Lagerabschnitt seitlich gelagert, bevorzugt beidseitig. Auf diese Weise ist eine besonders einfache Handhabung und intuitives Wenden möglich, wobei gleichzeitig der Lagerabschnitt zusammen mit dem Schließelement nur einen geringen Platz beim Wenden einnimmt. Zudem ist eine beidseitige Lagerung des Schließelementes während des Wendvorganges möglich.

So kann vorgesehen sein, dass der Lagerabschnitt, an dem das Schließelement gelagert ist, als Führungskulisse ausgebildet ist. Eine Führungskulisse ermöglicht eine geführte Bewegung auf einem oder mehreren vorgegebenen Pfaden. Die Führungskulisse ist dazu eingerichtet, die Wendbarkeit des Schließelementes zu unterstützen und den dafür benötigten Raum insbesondere in vertikaler Richtung zu minimieren. Das Schließelement kann unter Zuhilfenahme der Führungskulisse exzentrisch gelagert sein, sodass der notwendige Radius zum Verschwenken während des Wendens entsprechend der Formgebung des Schließelementes verkleinerbar ist. So kann auch vorgesehen sein, dass der Pfad der Führungskulisse zweidimensional ausgelegt ist.

So kann auch vorgesehen sein, dass die Führungskulisse in ihren Endbereichen in vertikaler Richtung ausgerichtet ist, sodass das Schließelement in horizontaler Richtung nicht unmittelbar bewegt werden kann. Zum Bewegen des Schließelementes in horizontaler Richtung muss dieses dann zunächst (etwas) angehoben werden, bis dass der Drehpunkt des Schließelementes den Bereich der Führungskulisse erreicht hat, der eine Bewegung in horizontaler Richtung zulässt. Auf diese Weise wird verhindert, dass das Schließelement in seinen finalen Stellungen (Schließstellung und Offenstellung) ohne Absicht in horizontaler Richtung bewegt wird. Dies erhöht die Sicherheit.

Typischerweise wird der Drehpunkt in Richtung der größten Ausdehnung des Schließelementes gegenüber dem Mittelpunkt verschoben sein, sodass ein kleinerer Wenderadius ermöglicht wird, als wenn der Drehpunkt in der Mitte bezogen auf die horizontale Erstreckung des Schließelementes in einer der beiden Stellungen gegeben ist. Dies ermöglicht ein Schließelement, welches betrachtet in den jeweiligen finalen Stellungen (Schließstellung/Offenstellung) in horizontaler Richtung größer ist als in vertikaler Richtung. Weist das Schließelement eine dreieckige Querschnittsfläche auf, sind alle drei Schenkel typischerweise unterschiedlich lang.

Das Schließelement kann auf einer oder mehrerer Auflageflächen aufliegen, was bevorzugt vorgesehen ist, wenn es in seiner Schließstellung und/oder seiner Offenstellung ist. Auf diese Weise werden auf das Schließelement einwirkende Kräfte nicht oder jedenfalls nicht ausschließlich über den Lagerabschnitt abgestützt, sondern das Schließelement stützt sich in seinen vorgesehenen Endpositionen unmittelbar an umgebendem Material ab und kontaktiert es zu diesem Zweck. So sind wesentlich höhere Kräfte durch das Schließelement in der Schließstellung und/oder der Offenstellung aufnehmbar.

Zur Abstützung des Schließelementes kann auch zumindest ein Abstützelement als zusätzliche Auflagefläche entlang der Erstreckung des Schließelementes vorgesehen sein. Insbesondere, wenn das Schließelement als Hohlkörper ausgebildet ist, kann vorgesehen sein, zumindest eine Aussparung vorzusehen, durch die das Abstützelement hindurchgreift, um die tatsächlich belastete Fläche abzustützen.

Vorgesehen kann sein, dass die den Schnurauslassboden bildende Fläche des Schließelementes in seiner Offenstellung im Wesentlichen in Schnurauslassausrichtung eben oder konvex ausgebildet ist, jedenfalls nicht konkav. Durch eine solche Ausgestaltung des Schnurauslassbodens werden über denselben geleitete Leitungen in Richtung der natürlichen Biegung gebogen und zwar auf ihrem Weg von dem Bodentank (typischerweise auch, typischerweise maßgeblich einen vertikalen Anteil enthaltend) hin zu einer Horizontalen in der Umgebung (aufliegend auf dem die Bodentankdose umgebenden Boden). Quer zur Schnurauslassausrichtung kann die Fläche beliebig ausgestaltet werden, auch wenn auch diesbezüglich bevorzugt eine Ebene vorgesehen ist.

Es kann ferner vorgesehen sein, dass das Schließelement in seiner Offenstellung einen zu der Schnurauslassaussparung weisenden und/oder zu seinem der Schnurauslassaussparung gegenüberliegenden Seite weisenden Übergangsabschnitt aufweist, in dem die den Schnurauslassboden bildende Fläche konvex gegenüber dem zwischen diesen beiden Abschnitten liegenden Abschnitt ausgebildet ist. Dieser kann beispielsweise in einer abgekanteten oder gerundeten Form ausgebildet sein. Auf diese Weise wird ein Kantenschutz bereitgestellt, sodass die aus dem Schnurauslass herausgeführten Leitungen nicht an einer ggf. scharfen Kante geknickt werden.

Bevorzugt ist vorgesehen, dass die Schnurauslassaussparung, wenn das Schließelement in seiner Offenstellung ist, oberseitig durch einen öffenbaren Deckel und unterseitig durch das Schließelement gebildet wird. Die Schnurauslassaussparung ist durch die Öffenbarkeit des Deckels somit geteilt und bei geöffnetem Deckel zumindest im Bereich des Schließelementes und/oder des Deckels U-förmig ausgebildet. Wird der Deckel der Bodentankdose geöffnet, können Leitungen problemlos auf das Schließelement als Schnurauslassboden gelegt werden. Auf diese Weise müssen Leitungen nicht durch eine enge Aussparung hindurchgefädelt werden; vielmehr steht der gesamte Raum zwischen Deckel und Schnurauslassboden zur Verfügung. Typischerweise ist der Deckel zum Verschließen des Bodentankes als Teil der Bodentankdose an einer Seite der Bodentankdose angelenkt, sodass dieser aufklappbar ist. Das Schließelement ist in dieser Ausgestaltung dann typischerweise nicht an dem schwenkbaren Teil des Deckels angeschlossen.

Bevorzugt ist vorgesehen, dass die Schnurauslassaussparung in eine Seitenwand des Bodentank eingebracht ist und das Schließelement außenwandig zu dem Bodentank angeordnet ist. Eine Seitenwand des Bodentanks kann auch durch einen in vertikaler Richtung abgekanteten Teil des Deckels bereitgestellt sein, in den jedenfalls ein Teil der Schnurauslassaussparung als Aussparung eingebracht ist. Durch das außenwandige Anordnen des Schließelementes zu dem Bodentank ist die Bedienung vereinfacht.

Bevorzugt ist die Bodentankdose dergestalt in den Boden eingelassen, dass das Schließelement in seiner Schließstellung mit dem die Bodentankdose umgebenden Boden im Wesentlichen bündig abschließt. Auch ist bevorzugt vorgesehen, dass das Schließelement in seiner Offenstellung im Wesentlichen nicht über den die Bodentankdose umgebenden Boden hinausragt. Auf diese Weise ist eine Stolpergefahr vermieden. So ist auch vorgesehen, dass der obere Abschluss der Schnurauslassaussparung unterhalb des die Bodentankdose umgebenden Bodens ist. Unmittelbar im Bereich der Schnurauslassaussparung wird daher ein geschützter Raum zur Verfügung gestellt, in dem die Leitungen liegen. Dieser Raum wird nach unten durch den Schnurauslassboden begrenzt, sodass dieser in vertikaler Richtung entlang des Schnurauslassbodens kleiner wird. Hierdurch wird sichergestellt, dass die aus der Schnurauslassaussparung herausgeführten Leitungen durch die Bodentankdose nach oben hin insofern gesichert sind, als dass ein Abknicken im Bereich der Schnurauslassaussparung beim Überfahren der Bodentankdose verhindert ist.

Die Erfindung wird anhand der beiliegenden Figuren näher erläutert. Es zeigen:
- **Fig. 1:**: Eine Bodentankdose in einer perspektivischen Ansicht,
- **Fig. 2:**: ein Schließelementmodul in einer perspektivischen Ansicht, das Schließelement in seiner Offenstellung,
- **Fig. 3:**: das Schließelementmodul der Fig. 2 in einer perspektivischen Ansicht, das Schließelement in seiner Schließstellung,
- **Fig. 4:**: das Schließelementmodul der Fig. 2 in einer Seitenansicht, das Schließelement in seiner Offenstellung, mit Blick auf das Schließelement,
- **Fig. 5:**: das Schließelementmodul der Fig. 2 in einer Seitenansicht, das Schließelement in seiner Schließstellung, mit Blick auf das Schließelement, und
- **Fig. 6:**: eine Seitenansicht des Schließelementmoduls der Fig. 2 mit Blick auf die Führungskulisse.

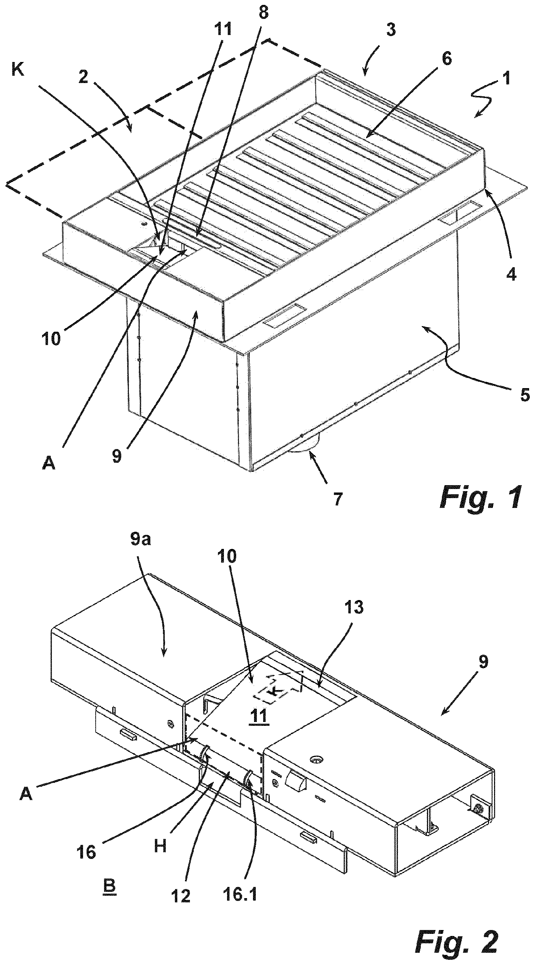

Figur 1 zeigt eine Bodentankdose 1. Die Bodentankdose 1 ist typischerweise in den Boden eingelassen und schließt oberseitig mit der Oberfläche des die Bodentankdose 1 umgebenden Bodens 2 (in Figur 1 nur schematisch eingezeichnet) ab. Die Bodentankdose weist einen Deckel 3 auf. Der Deckel 3 ist an einem Ende 4 gelenkig an ein Unterteil 5 der Bodentankdose 1 angeschlossen, sodass der Deckel 3 aufschwenkbar ist. Im Inneren der Bodentankdose 1, insbesondere im Inneren des Unterteils 5 ist ein Raum angeordnet, welcher als Bodentank angesprochen wird. In diesem Raum sind Installationsanschlüsse, etwa elektrische/elektronische Installationsanschlüsse, Wasseranschlüsse und dergleichen angeordnet. Der Deckel 3 weist ein nach oben weisendes Fach 6 auf. In dieses Fach 6 können Materialien eingesetzt werden, die denjenigen Materialien, die den Deckel 3 außenseitig umgeben, entsprechen, etwa Steinfliesen oder dgl. Der Deckel 3 verfügt über einen Griff 8, welcher in dem Deckel 3 versenkbar ist. An diesem Griff 8 kann ein Nutzer den Deckel um das gegenüberliegende Ende 4 des Deckels 3 aufschwenken. Unterseitig ist an das Unterteil 5 ein Abfluss 7 angeordnet, aus dem von oben in den Bodentank eindringendes Wasser herausgeleitet wird.

Dem Ende 4 des Deckels 3 gegenüberliegend ist ein Schließelementmodul 9 angeordnet. Das Schließelementmodul 9 umfasst ein Schließelement 10. Das Schließelement 10 ist in dieser Ansicht in seiner Offenstellung. Hierdurch wird eine Wegsamkeit in das Innere der Bodentankdose 1, den Bodentank, geschaffen und zwar durch die Schnurauslassaussparung A. Die Schnurauslassaussparung A ist eine Durchbrechung, die in den Bodentank mündet. Zusammen mit dem Schließelement 10 bildet sie einen Schnurauslass, durch den nicht dargestellte Leitungen aus dem Bodentank an die Umgebung geführt werden können. Sind solche Leitungen herausgeführt, liegen diese auf dem Schließelement 10 auf; die Fläche, auf der solche Leitungen liegen, wird nachstehend als Schnurauslassboden 11 angesprochen. Auf dem Schließelement 10, respektive auf den Schnurauslassboden 11 geführte Leitungen sind nach unten hin durch dasselbe abgestützt und durch die seitliche Begrenzung des Schließelementmoduls 9, welche hier als Lagerabschnitte für das Schließelement 10 dienen, zudem seitlich geführt, sodass ein Schnurauslasskanal K bereitgestellt ist.

Die Schnurauslassaussparung A wird oberseitig durch den nach oben verschwenkbaren Deckel 3 und nach unten durch das Schließelement 10, respektive den Bereich des Schließelementes 10, der im Bereich der Schnurauslassaussparung A vorhanden ist, begrenzt. Die Schnurauslassaussparung A ist daher geteilt. Der Deckel 3 kann durch einen Nutzer aufgeschwenkt werden. Leitungen können an den Installationsanschlüssen in dem Bodentank angeschlossen werden; auch ist denkbar, dass die Installationsanschlüsse an dem Deckel 3 befestigt sind, sodass eine einfache Beschickung an dem aufgeschwenkten Deckel 3 möglich ist. Die Leitungen werden auf das Schließelement 10, respektive den Schnurauslassboden 11 des Schließelementes 10 gelegt und der Deckel 3 geschlossen. Ein aufwendiges Hindurchführen der Leitungen durch eine geschlossene Schnurauslassaussparung ist hierdurch vermieden.

Eine Detailansicht des Schließelementes 10 des Schließelementmoduls 9 zeigt Figur 2. Gegenüber Figur 1 ist diese Ansicht gedreht und zeigt das Schließelementmodul 9, respektive das Schließelement 10 von der Seite der Schnurauslassaussparung A aus. Die Position des Volumens des Bodentanks ist mit B in dieser Figur sowie in den nachstehenden Figuren gekennzeichnet. Das Schließelement 10 ist in Figur 2 ebenfalls in seiner Offenstellung gezeigt. Die als Schnurauslassboden 11 fungierende Fläche ist in dieser Ausgestaltung im Wesentlichen eben in Schnurauslassrichtung als auch quer hierzu ausgebildet. Lediglich an den jeweiligen Enden, mithin zu der Schnurauslassaussparung A und dem gegenüberliegenden Ende hin sind Übergangsabschnitte 12, 13 vorgesehen, in denen die Fläche konvex, in diesem Ausführungsbeispiel mit einem Radius versehen, ausgebildet ist. Hierdurch wird ein zu starkes Abknicken der über den Schnurauslassboden 11 geführten Leitungen verhindert, sodass diese nicht beschädigt werden.

Das Schließelementmodul 9 weist auch mit dem Schließelement 10 keine nach oben abragenden Vorsprünge auf, die eine Stolpergefahr begründen könnten. Die durch die Schnurauslassaussparung A herausgeführten Leitungen füllen den Raum zwischen oberem Abschluss 9a und Schnurauslassboden 11 aus, sodass die durch das Schließelementmodul 9 in seinem Übergang zum Schließelement 10, respektive dem Schnurauslassboden 11 bereitgestellte Kante tatsächlich keine oder keine wesentliche Unebenheit darstellt, die eine Stolpergefahr begründen würde.

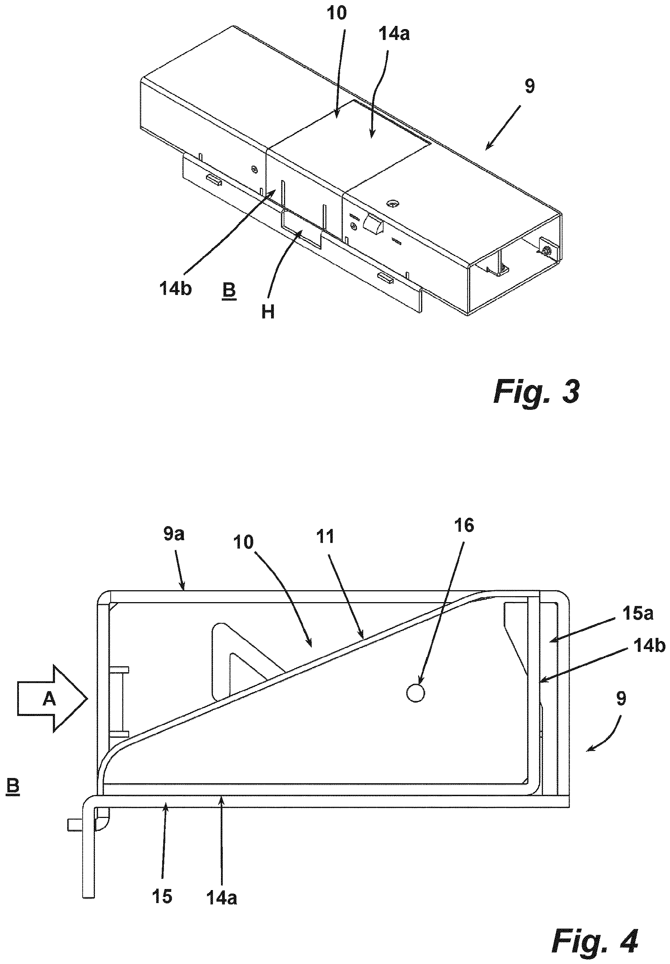

Figur 3 zeigt das in Figur 2 dargestellte Schließelementmodul 9 mit dem Schließelement 10 in seiner Schließstellung. In dieser Stellung verschließt das Schließelement 10 den Schnurauslass oberseitig durch eine Abschlussfläche 14a mittelbar. Die Abschlussfläche 14a ist bündig mit dem das Schließelement 10, respektive der Abschlussfläche 14a umgebenden Material des Schließelementmoduls 9. Insgesamt wird in dieser Stellung des Schließelementes 10 ein nach oben hin ebenes Schließelementmodul 9 bereitgestellt, sodass auch in dieser Konfiguration keine Stolpergefahr besteht. Zusätzlich ist die Schnurauslassaussparung A durch die Schließfläche 14b unmittelbar verschlossen. Typischerweise kontaktiert die Schließfläche 14b jedenfalls das die Schnurauslassaussparung A oberseitig und/oder seitlich begrenzende Material.

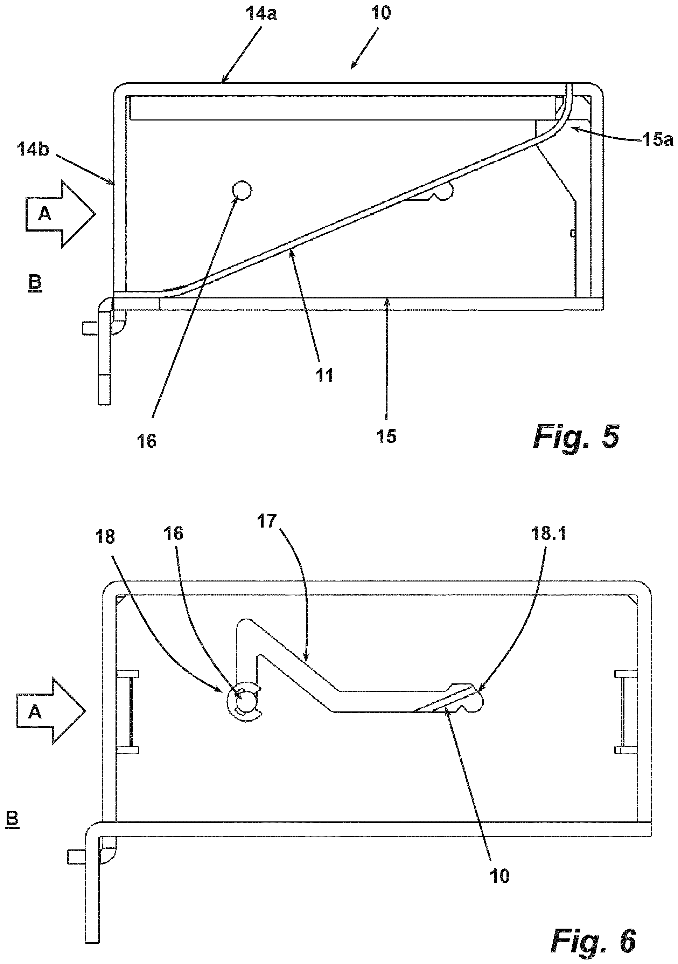

Wie in Figuren 4 und 5 erkennbar ist, wird das Schließelement 10 zum Ändern seiner Stellung von einer Offenstellung in seine Schließstellung gewendet. Hierzu kann ein Nutzer in eine Handaussparung H (in Figuren 2 und 3 gekennzeichnet) eingreifen, das Schließelement 10 erfassen und wenden. In seiner Offenstellung (Figur 4) weist die Schnurauslassbodenfläche 11 nach oben; die Abschlussfläche 14a weist nach unten und liegt auf einer Abstützfläche 15, hier als Blech ausgebildet, des Schließelementmoduls 9 auf. In dieser Konfiguration können Leitungen aus der Schnurauslassaussparung (in Figur 4 mit A gekennzeichnet) aus dem Bodentank heraus an die Umgebung geführt werden.

Die Querschnittsfläche des Schließelementes 10 ist dreiecksförmig, hier in Form eines rechtwinkligen Dreiecks. Auf diese Weise wird eine Schräge, ausgehend von dem unteren Abschluss der Schnurauslassaussparung A hin zur Umgebung, respektive dem oberen Abschluss des das Schließelement 10 umgebenden oberen Abschlusses 9a des Schnurelementmoduls 9 bereitgestellt.

In seiner Schließstellung (Figur 5) weist die Abschlussfläche 14a nach oben, während die Schnurauslassbodenfläche 11 nach unten weist. Die Schnurauslassaussparung ist auf diese Weise verschlossen. Abgestützt wird das Schließelement 10 zusätzlich durch Abstützelemente 15a. Diese greifen durch Aussparungen 16, 16.1 ein (auch in Figur 2 eingezeichnet), durch das Schließelement 10 hindurch und stützen das die Abschlussfläche 14a bildende Blech von unten ab. Ein Durchdringen der Abstützelemente 15 durch das Schließelement 10 ist hier insbesondere deshalb vorteilhaft, da das Schließelement 10 als Hohlkörper ausgebildet ist.

Gewendet wird das Schließelement 10 um eine Drehachse 16, an der das Schließelement 10 gelagert ist. Die Achse, um die das Schließelement 10 wendbar ist, ist parallel zu der Erstreckung der Schnurauslassaussparung A. Um einen möglichst flachen Aufbau des Schließelementmoduls 9 bei gleichzeitig gemäßigter Schräge der Schnurauslassbodenfläche 11 des Schließelementes 10 zu verwirklichen, ist das Schließelement 10 in horizontaler Erstreckung größer als in vertikaler Erstreckung in seiner Schließund/oder Offenstellung, in diesem Ausführungsbeispiel in beiden Stellungen. Um eine Wendbarkeit des Schließelementes 10 zu ermöglichen, ist die Drehachse 16 in einer Führungskulisse 17 als Lagerabschnitt gelagert (siehe Figur 6), in der die Drehachse 16 gegenüber dem Schließelementmodul 9 verschiebbar gelagert ist. Die Führungskulisse 17 definiert im zweidimensionalen Raum einen Pfad. In Figur 6 ist das verdeckte Schließelement 10 in seiner Schließstellung (wie in Figur 5) dargestellt. Die Drehachse 16 befindet sich an einem ersten distalen Ende 18 der Führungskulisse. Zum Wenden wird der Teil des Schließelementes 10, der eine größere Ausdehnung in vertikaler Richtung aufweist, angehoben, alsdann gewendet und verschoben, sodass der Drehpunkt 16 zu dem anderen distalen Ende 18.1 der Führungskulisse 17 verschoben wird, resultierend in der Anordnung, die in Figur 4 (Offenstellung) abgebildet ist. In diesem Ausführungsbeispiel ist vorgesehen, dass die distalen Enden 18, 18.1 der Führungskulisse 17 keine horizontale Bewegung zulassen. Auf diese Weise wird ein unbeabsichtigtes Verschieben in horizontaler Richtung verhindert. Vor diesem Hintergrund ist der Pfad der Führungskulisse 17 ausgehend von dem ersten distalen Ende 18 derselben um zumindest einen Zentimeter, typischerweise mehr, in vertikaler Richtung ausgelegt, um ein unbefugtes Öffnen der Schnurauslassaussparung A durch Wenden des Schließelementes 10 zu verhindern. Für einen Außenstehenden ist es schwierig, das Schließelement 10 senkrecht anzuheben, da dieses keinen nach oben weisenden Griff aufweist.

Die Erfindung ist anhand eines Ausführungsbeispiels näher erläutert. Ohne den Schutzbereich, beschrieben durch die Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Bodentankdose
- 2: Bodenoberfläche
- 3: Deckel
- 4: Ende des Deckels
- 5: Unterteil
- 6: Fach des Deckels
- 7: Abfluss
- 8: Griff
- 9: Schließelementmodul
- 9a: oberer Abschluss Schließelementmodulabstützfläche
- 10: Schließelement
- 11: Schnurauslassboden
- 12, 13: Übergangsabschnitt
- 14a: Abschlussfläche
- 14b: Schließfläche
- 15: Abstützfläche
- 15a: Abstützelement
- 16: Drehachse
- 17: Führungskulisse
- 18, 18.1: distale Enden der Führungskulisse

- A: Schnurauslassaussparung
- B: Bodentank
- H: Handaussparung
- K: Schnurauslasskanal

## Patentansprüche

1. Bodentankdose (1) mit einem einen Bodentank oberseitig verschließenden Deckel (3) und einer Schnurauslassaussparung (A) zum Hindurchführen von einer oder mehreren Leitungen zwischen dem Bodentank (B) und der benachbarten Bodenoberfläche (2), wobei die Bodentankdose (1) über ein an einem Lagerabschnitt bewegbar gelagertes, die Schnurauslassaussparung (A) in einer Schließstellung verschließendes und in einer Offenstellung die Schnurauslassaussparung (A) freigebendes, zwischen der Schließstellung und der Offenstellung verstellbares Schließelement (10) verfügt, **dadurch gekennzeichnet, dass** die Schnurauslassaussparung (A) an dem Bodentank in horizontale Richtung weist und das Schließelement (10) in seiner Offenstellung einen zur Umgebung führenden Schnurauslassboden (11) bildet.

2. Bodentankdose nach Anspruch 1, **dadurch gekennzeichnet, dass** das Schließelement (10) an dem Lagerabschnitt wendbar gelagert ist und durch ein Wenden seine Stellung von einer Schließstellung in eine Offenstellung änderbar ist.

3. Bodentankdose nach Anspruch 2, **dadurch gekennzeichnet, dass** das Schließelement (10) um eine Schwenkachse wendbar ist, die im Wesentlichen parallel zu der Quererstreckung der Schnurauslassaussparung (A) verläuft.

4. Bodentankdose nach einem der Ansprüche 1 bis 3, **dadurch gekennzeichnet, dass** das Schließelement (10) an dem Lagerabschnitt beidseitig in einer Führungskulisse (17) gelagert ist.

5. Bodentankdose nach Anspruch 4, **dadurch gekennzeichnet, dass** die Führungskulisse (17) einen Pfad beschreibt, dessen distale Enden (18, 18.1) zumindest mit einem vektoriellen Anteil in vertikale Richtung weisen, sodass eine horizontale Bewegung des Schließelementes (10) in seiner Schließstellung und/oder seiner Offenstellung unterbunden ist.

6. Bodentankdose nach einem der Ansprüche 1 bis 5, **dadurch gekennzeichnet, dass** die Querschnittsgeometrie des Schließelements (10) im Wesentlichen dreieckförmig ist, wobei der Schnurauslassboden (11) durch eine erste Seitenfläche bereitgestellt ist und mit einer weiteren Seitenfläche (14) die Schnurauslassaussparung verschließbar ist.

7. Bodentankdose nach einem der Ansprüche 1 bis 6, **dadurch gekennzeichnet, dass** die den Schnurauslassboden (11) bildende Fläche des Schließelementes (10) in seiner Offenstellung im Wesentlichen eben oder konvex ausgebildet ist.

8. Bodentankdose nach einem der Ansprüche 1 bis 7, **dadurch gekennzeichnet, dass** das Schließelement (10) in seiner Offenstellung einen zu der Schnurauslassaussparung (A) weisenden und/oder zu seinem der Schnurauslassaussparung (A) gegenüberliegenden Seite weisenden Übergangsabschnitt (12, 13) aufweist, in dem die den Schnurauslassboden (11) bildende Fläche konvex ausgebildet ist.

9. Bodentankdose nach einem der Ansprüche 1 bis 8, **dadurch gekennzeichnet, dass** das Schließelement (10) über zumindest eine Aussparung verfügt, in die, wenn das Schließelement (10) in seiner Schließstellung ist, ein Abstützelement (15a) eingreift und durch den ein zur Umgebung weisender Teil des Schließelementes (10) zur Lastaufnahme abgestützt ist.

10. Bodentankdose nach einem der Ansprüche 1 bis 9, **dadurch gekennzeichnet, dass** die Schnurauslassaussparung (A) oberseitig durch den Deckel (3) und unterseitig durch das Schließelement (10), wenn das Schließelement (10) in seiner Offenstellung ist, begrenzt ist.

11. Bodentankdose nach einem der Ansprüche 1 bis 10, **dadurch gekennzeichnet, dass** sich der obere Abschluss der Schnurauslassaussparung (A) unterhalb der die Bodentankdose (1) umgebenden Bodenoberfläche (2) befindet.

12. Bodentankdose nach einem der Ansprüche 1 bis 11, **dadurch gekennzeichnet, dass** die Schnurauslassaussparung (A) in eine den Bodentank begrenzende Seitenwand der Bodentankdose (1) eingebracht ist und das Schließelement (10) außenwandig zu dem Bodentank angeordnet ist.

13. Bodentankdose nach einem der Ansprüche 1 bis 12, **dadurch gekennzeichnet, dass** das Schließelement (10) Teil eines Schließelementmoduls (9) ist, an dem es in dem Lagerabschnitt gelagert ist und wobei das Schließelementmodul (9) außenwandig zu dem Bodentank angeordnet ist.

14. Bodentankdose nach einem der Ansprüche 1 bis 13, **dadurch gekennzeichnet, dass** das Schließelement (10) in seiner Schließstellung mit der die Bodentankdose (1) umgebenden Bodenoberfläche (2) bündig oder im Wesentlichen bündig abschließt.

15. Bodentankdose nach einem der Ansprüche 1 bis 14, **dadurch gekennzeichnet, dass** das Schließelement (10) in seiner Offenstellung nicht über die die Bodentankdose (1) umgebenden Bodenoberfläche (2) hinausragt.
